# EUROPÄISCHE PATENTSCHRIFT

(11) **EP 1 449 216 B1**
(45) Veröffentlichungstag und Bekanntmachung des Hinweises auf die Patenterteilung: **11.05.2005**
(21) Anmeldenummer: 02787384.3
(22) Anmeldetag: 23.11.2002
(51) Int. Cl.: G11B 33/04

(54) **BEHÄLTER ZUR AUFNAHME EINES VERPACKTEN INFORMATIONSTRÄGERS**
RECEPTACLE FOR RECEIVING A PACKAGED DATA CARRIER
CONTENANT POUR SUPPORT D'INFORMATIONS EMBALL

(30) Priorität: 28.11.2001 DE 20119369 U; 13.04.2002 DE 20205789 U
(43) Veröffentlichungstag der Anmeldung: 25.08.2004
(73) Patentinhaber: Braun & Connelly Ohg, 20144 Hamburg (DE)
(72) Erfinder: BRAUN, Stephan, 22529 Hamburg (DE); CONNELLY, Kay, 20253 Hamburg (DE)
(74) Vertreter: Meyer, Ludgerus A.
(86) Internationale Anmeldenummer: PCT/DE2002/004303
(87) Internationale Veröffentlichungsnummer: WO 2003/049114

(56) Entgegenhaltungen:
- US-A- 4 071 139
- US-A- 5 954 194

## Beschreibung

Die Erfindung betrifft einen Behälter zur Aufnahme eines verpackten Informationsträgers, insbesondere einer CD oder DVD, mit einem ersten Aufnahmeraum zur Aufnahme des verpackten Informationsträgers und einem zweiten Aufnahmeraum zur Aufnahme von Printmaterialien oder dergleichen, der vom ersten Aufnahmeraum abgeteilt ist.

CDs und DVDs werden häufig in sogenannte Jewel-Cases verpackt, die durch einen schwenkbaren Deckel geöffnet werden können und in ihrem Inneren einen Halter aufweisen, auf den eine CD oder DVD aufgesetzt werden kann. An der Innenseite des schwenkbaren Deckels dieser Jewel-Cases kann ein Cover oder - aufgrund des begrenzten Raumangebotes - nur ein entsprechend dünnes Booklet befestigt werden.

Da aber mittlerweile Software, darunter auch Video- und Computerspiele, fast ausschließlich in Form von CDs vertrieben werden, deren Handhabung bzw. Spielanleitung immer komplexer werden, besteht Bedarf, zugleich mit der CD ein entsprechend umfangreiches Handbuch mitzuliefem, das in den bekannten Jewel-Cases keinen Platz findet.

Es ist zwar bekannt, Jewel-Cases als Doppel- oder Mehrfach-Cases auszubilden, in denen ein größeres Booklet aufgenommen werden kann, jedoch wird damit kein unabhängiger geschlossener Raum gebildet.

Des weiteren gewinnt der Vertrieb von Spielfilmen auf DVDs zunehmend an Bedeutung, die neben dem eigentlichen Spielfilm eine Vielzahl von zusätzlichen Informationen enthalten, wie mehrere Sprachversionen und Hintergrundberichte, so dass hier ebenfalls Bedarf an umfangreichen Booklets besteht. Zusätzlich bietet sich an, zu Marketingzwecken neben der CD oder DVD Merehandiseartikel beizufügen, um so den Absatz von CDs oder DVDs zu steigern. Größere Verpackungen, bspw. aus Karton, wie sie für den Vertrieb von Software verwendet werden, sind hierfür nicht geeignet, da sie aufgrund ihrer größeren Abmessungen nicht platzsparend wie Jewel-Cases transportiert und gelagert werden können.

Es ist daher Aufgabe der Erfindung, einen Behälter zur Aufnahme eines insbesondere in einem Jewel-Case oder einer ähnlichen Verpackung aus Kunststoff oder Pappe verpackten Informationsträgers, insbesondere einer CD oder DVD, bereitzustellen, in den in einen unabhängigen Raum eine dazugehörige Produktbeschreibung, Merchandiseartikel o. ä. eingelegt werden können und der aufgrund seiner kompakten Abmessungen wie herkömmliche CD- oder DVD-Hüllen platzsparend transportiert und in für solche Hüllen ausgelegten Warenpräsentationseinrichtungen bereitgestellt werden kann.

Die Aufgabe der Erfindung wird durch die im Anspruch 1 angegebene Erfindung gelöst. Bevorzugte Ausführungsformen der Erfindung sind in den Unteransprüchen angegeben.

Der gattungsgemäße Behälter weist zur Aufnahme eines Informationsträgers, insbesondere einer CD oder DVD, einen ersten Aufnahmeraum zur Aufnahme des Informationsträgers und einen zweiten Aufnahmeraum zur Aufnahme von Printmaterialien oder dergleichen auf, der vom ersten Aufnahmeraum abgeteilt ist.

Die erfindungsgemäße Lösung ist dadurch gekennzeichnet, dass der erste Aufnahmeraum eine Halterung zur Aufnahme des verpackten Informationsträgers aufweist, und dass der zweite Aufnahmeraum mittels einer entfembaren Abdeckung vom ersten Aufnahmeraum abgeteilt ist, wobei beide Aufnahmeräume im wesentlichen die gleichen Grundflächenmaße aufweisen.

Damit kann der erfindungsgemäße Behälter mit einem Informationsträger in Transport- und Warenpräsentationseinrichtungen einsortiert und gelagert werden, die für bekannte CD- oder DVD-Behälter ausgelegt sind.

Vorzugsweise ist vorgesehen, dass die Verpackung des Informationsträgers als standardisierter CD- oder DVD-Behälter, bspw. wie ein Jewel-Case, ausgebildet ist.

In einer bevorzugten Ausführungsform ist vorgesehen, dass der zweite Aufnahmeraum rechteckförmig mit einem umlaufenden Rand ausgebildet ist, der seitliche Überhöhungen aufweist, die an zwei sich gegenüberliegenden Längsseiten des umlaufenden Randes angeordnet sind und an deren Enden nach innen gerichtete Nasen vorgesehen sind, die den erste Aufnahmeraum teilweise umgreifen und eine Verpackung festhalten können, so dass eine Verpackung von einer Querseite des Behälters einschiebbar ist, wobei die Vorderseite der Verpackung unverdeckt bleibt.

In einer weiteren Ausführungsform ist vorgesehen, dass der zweite Aufnahmeraum mit einem umlaufenden Rand ausgebildet ist, der an zwei sich gegenüber liegenden Längsseiten erhöhte Seitenwände aufweist, die die Halterung bilden und den ersten Aufnahmeraum begrenzen, wobei an den Enden der erhöhten Seitenwände nach innen gerichtete Kanten angeordnet sind, die den ersten Aufnahmeraum teilweise umgreifen und eine Verpackung festhalten können, so dass ebenfalls die Verpackung von einer Querseite des Behälters einschiebbar ist und die Vorderseite der Verpackung unverdeckt bleibt.

In einer weiteren Ausführungsform ist vorgesehen, dass die Abdeckung in ein Schienenpaar einschiebbar ist, das an den Innenseiten der erhöhten Seitenwände angeordneten ist.

Vorzugsweise ist vorgesehen, dass der erste Aufnahmeraum einen Anschlag zur Begrenzung der Einschubstrecke des Informationsträgers enthält.

In einer weiteren Ausführungsform ist vorgesehen, dass die Überhöhungen aus einem elastischem Material gefertigt sind, die nach außen gebogen werden können, so dass ein Informationsträger durch Auslenken der Überhöhungen von der Vorderseite auf den Behälter aufgesetzt und abgenommen werden kann.

In einer besonderen Ausführungsform ist vorgesehen, dass der erste Aufnahmebehälter als quaderförmiger, einseitig offener Behälter ausgebildet ist, in den eine Verpackung einschiebbar ist, und dass der erste Aufnahmebehälter auf den zweiten Aufnahmebehälter aufsetzbar ist.

Vorzugsweise ist vorgesehen, dass die Abdeckung Stifte aufweist, die in Offnungen an der Innenseite des umlaufenden Randes einrastbar sind.

Vorzugsweise ist vorgesehen, dass der zweite Aufnahmeraum Halterungen zur räumlichen Festlegung von in den zweiten Aufnahmeraum eingeführten Gegenstände enthält, so dass speziell eine Beschädigung von stoßempfindlichen Merchandiseartikeln vermieden werden kann.

Vorzugsweise ist vorgesehen, dass die der Behälter und die Abdeckung aus durchsichtigem Polystyrol gefertigt sind, so dass das Innere des Behälters mit dem Merchandiseartikel einsehbar ist.

In den zweiten Aufnahmeraum können beliebige Artikel eingelegt werden, z.B. Booklets, Spielzeuge, aber auch bei entsprechender Größe ein gepresstes T-Shirt.

Vorzugsweise bildet die entfembare Abdeckung einen Teil des ersten Aufnahmeraums.

Eine weiter bevorzugte Lösung ist dadurch gekennzeichnet, dass der erste Aufnahmeraum eine rechteckige Grundplatte, Halteelemente, die an zwei gegenüberliegenden Kanten der Grundplatte angeordnet sind, und nach innen gerichtete Vorsprünge am äußeren Ende der Halteelemente enthält, und dass die Grundplatte in den ersten Aufnahmeraum gerichtete Andrückelemente aufweist, die federnd ausgebildet sind, so dass ein in den ersten Aufnahmeraum eingesetzter Informationsträger von den Andrückelementen an die nach innen gerichteten Vorsprünge gedrückt wird und so zwischen den Andrückelementen und den Vorsprüngen gehalten ist. Somit kann die Anzahl der Varianten der Behälter reduziert werden, die sonst für verschieden dicke Jewel-Cases bereitgestellt werden müssten.

Es kann auch vorgesehen sein, dass die Grundplatte kurvenförmige Einschnitte aufweist, durch die in der Grundplatte abgegrenzte, federnde Flächenbereiche ausgebildet sind, die über Stege mit dem übrigen Bereich der Grundplatte verbunden sind, und dass die von der Grundplatte vorstehende Andrückelemente, die gegen einen in den ersten Aufnahmeraum eingeführten Informationsträger drücken, in den gebildeten Flächenbereichen angeordnet sind. So kann die Abdeckung mit den Andrückelementen einstückig und damit kostengünstig gefertigt werden.

In einer weiter bevorzugten Ausführungsform ist vorgesehen, dass der Behälter wenigstens eine Rasteinrichtung zur Befestigung der Abdeckung am zweiten Aufnahmeraum aufweist, die durch einen in den ersten Aufnahmeraum eingesetzten Informationsträger gegen Abnahme vom zweiten Aufnahmeraum blockierbar ist. Damit wird sichergestellt, dass der erfindungsgemäße Behälter erst geöffnet und der Merchandiseartikel entnommen werden kann, nachdem der verpackte Informationsträger vom Behälter getrennt wurde. Dies erlaubt es auch, den erfindungsgemäßen Behälter mit aufgesetzten Informationsträger auf einfache Weise sicher zu verschließen, indem lediglich eine Entfernung des verpackten Informationsträgers mit einer Klammer verhindert wird, die den verpackten Informationsträger im ersten Aufnahmeraum festhält.

Vorzugsweise ist vorgesehen, dass der erste Aufnahmeraum wenigstens eine Ausnehmung und die Rasteinrichtung des zweiten Aufnahmeraums wenigstens einen seitlich angeordneten Haken am Ende einer biegbaren Verlängerung aufweist, wobei der Haken in die Ausnehmung des ersten Aufnahmeraums eingreifen kann, so dass der erste Aufnahmeraum am zweiten Aufnahmeraum befestigbar ist, wobei ein in den ersten Aufnahmeraum eingesetzter Informationsträger verhindert, dass der Haken nach innen gedrückt und damit aus der Ausnehmung gelöst werden kann, so dass zuerst der verpackte Informationsträger entfernt werden muss, um die Abdeckung entfemen zu können.

In einer besonderen Ausführungsform ist vorgesehen, dass die Halteelemente federnd ausgebildet sind, so dass der verpackte Informationsträger sowohl seitlich in den ersten Aufnahmeraum eingeschoben wie auch aufgesetzt und angedrückt werden kann, wobei die Halteelemente nach außen gebogen werden, um anschließend wieder zurückzuschnappen und den verpackten Informationsträger festzuhalten.

In einer weiter bevorzugten Ausführungsform ist vorgesehen, dass der erste Aufnahmeraum am zweiten Aufnahmeraum durch ein Filmgelenk schwenkbar befestigt ist, so dass die Aufnahmeräume einstückig und damit kostengünstig gefertigt werden können.

Im folgenden wird die Erfindung unter Bezugnahme auf die Zeichnung genauer erläutert, wobei
- Fig. 1: eine Vorderansicht einer ersten Ausführungsform der Erfindung,
- Fig. 2: eine perspektivische Ansicht der ersten Ausführungsform,
- Fig. 3: einen Schnitt entlang der Linie a-a der Fig. 1,
- Fig. 4: eine Explosionsdarstellung der Fig. 3,
- Fig. 5: einen Schnitt entlang der Linie b-b der Fig. 1,
- Fig. 6: eine Explosionsdarstellung der Fig. 5,
- Fig.7: eine Vorderansicht einer zweiten Ausführungsform der Erfindung,
- Fig. 8: eine perspektivische Ansicht der zweiten Ausführungsform,
- Fig. 9: einen Schnitt entlang der Linie a-a der Fig. 7,
- Fig. 10: eine Explosionsdarstellung der Fig. 9,
- Fig. 11: einen Schnitt entlang der Linie b-b der Fig. 7,
- Fig. 12: eine Explosionsdarstellung der Fig. 11,
- Fig. 13: eine perspektivische Ansicht einer dritten Ausführungsform der Erfindung,
- Fig. 14: eine Vorderansicht der dritten Ausführungsform der Erfindung,
- Fig. 15: einen Schnitt entlang der Linie a-a der Fig. 14,
- Fig. 16: eine Explosionsdarstellung der Fig. 15,
- Fig. 17: einen Schnitt entlang der Linie b-b der Fig. 14,
- Fig. 18: eine Explosionsdarstellung der Fig. 17 zeigt,
- Fig. 19: eine perspektivische Darstellung eines erfindungsgemäßen Behälters mit einem aufgesetzten Informationsträger,
- Fig. 20: eine perspektivische Darstellung eines Kastens ohne aufgesetzte Abdeckung,
- Fig. 21: eine perspektivische Darstellung einer Abdeckung, und
- Fig. 22: eine Explosionsdarstellung des erfindungsgemäßen Behälters mit einem Informationsträger.

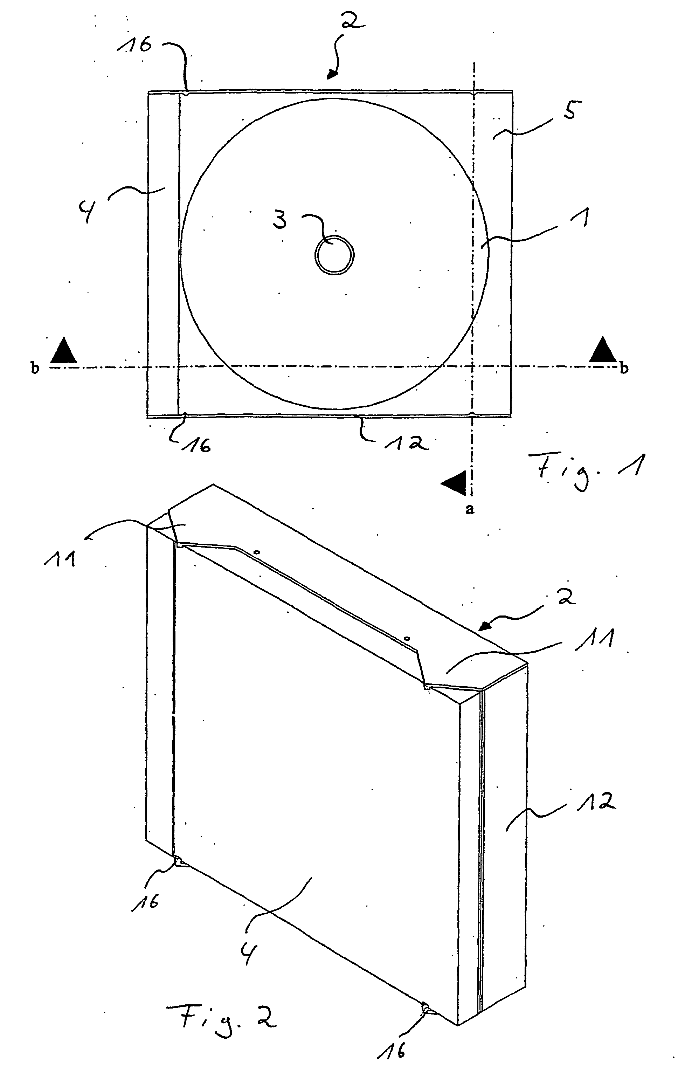

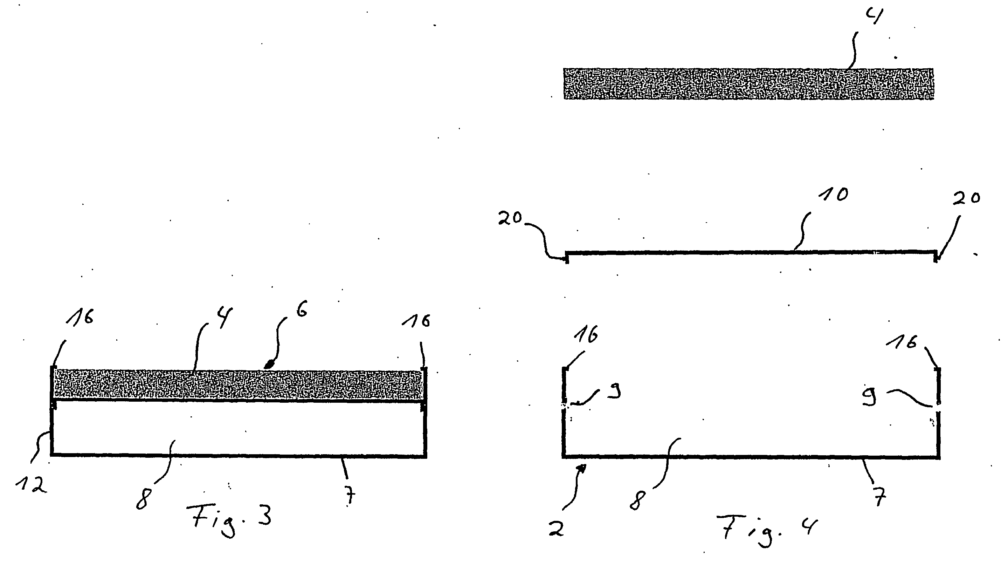

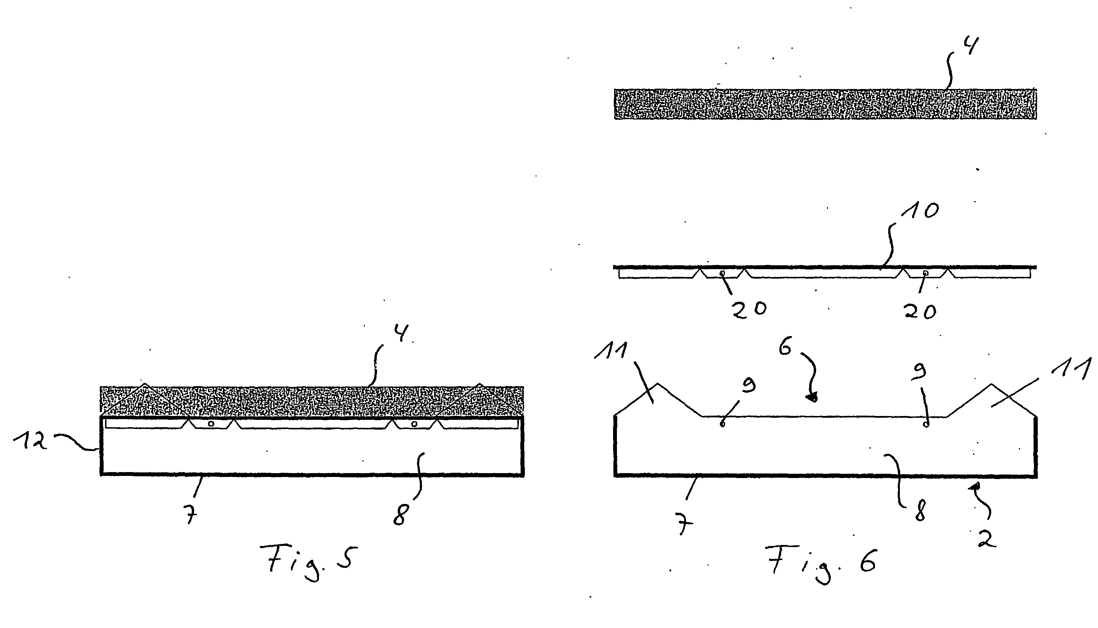

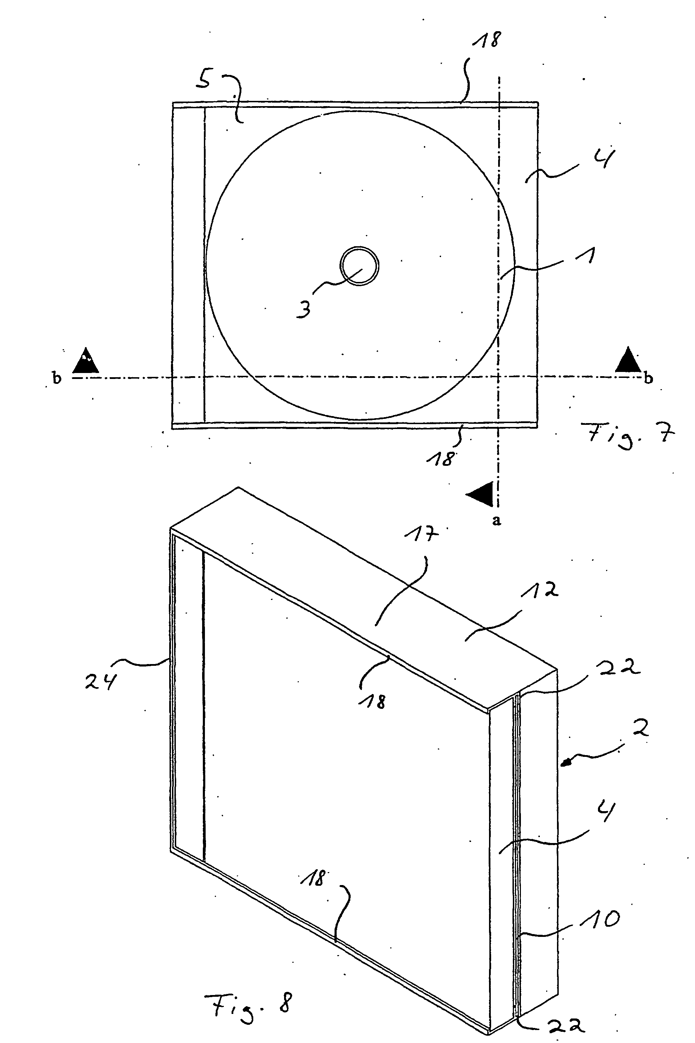

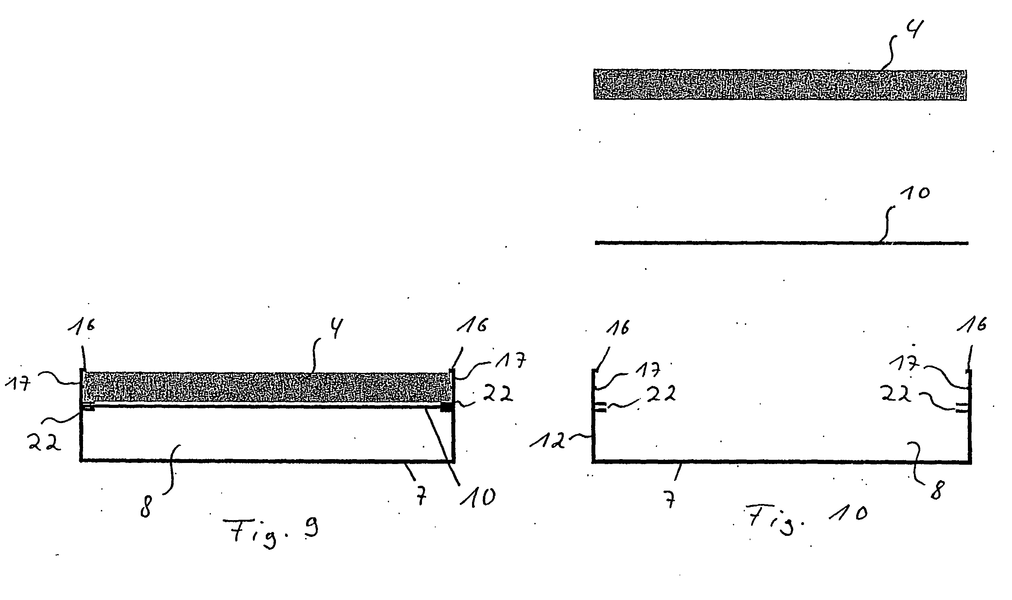

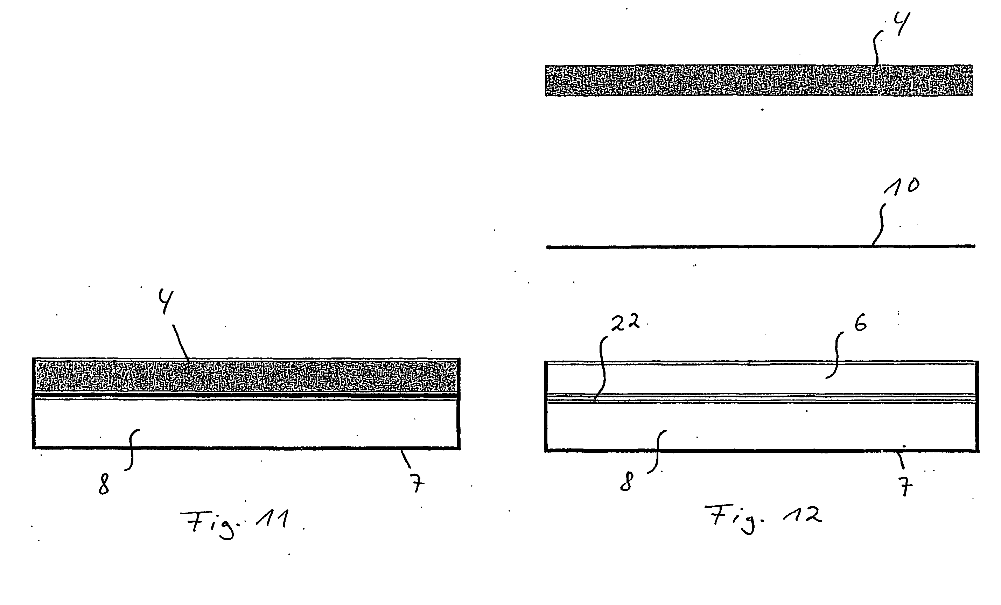

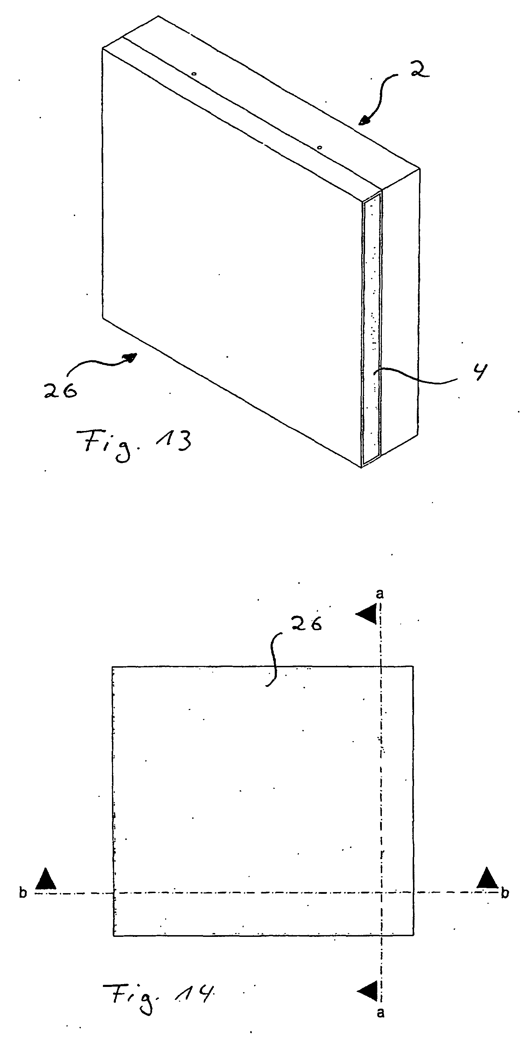

Es wird auf die Fig. 1 bis 6 Bezug genommen.

Fig. 1 zeigt eine Verpackung 4, die einem herkömmlichem Jewel-Case entspricht, dass zur Verpackung von Informationsträgem 1 wie CDs oder DVDs verwendet wird. Soweit hier der Begriff Jewel-Case verwendet wird, ist darunter jede Art einer standardisierten CD- oder -DVD-Verpackung aus Kunststoff oder Pappe zu verstehen. Die Verpackung 4 ist mit einem schwenkbaren Deckel 5 .aus durchsichtigem Polystyrol zum Öffnen und Schließen versehen. Im Inneren der Verpackung 4 befindet sich ein Halter 3, auf den ein Informationsträger 1 aufgesetzt ist. Die Verpackung 4 ist an einem erfindungsgemäßen Behälter 2 befestigt, in dem zusätzlich Platz für ein umfangreiches Booklet oder andere Merchandiseartikel vorhanden ist.

Der erfindungsgemäße Behälter 2 (siehe Fig. 2 - 6) ist aus durchsichtigem Polystyrol gefertigt und besteht aus einer rechteckigen Bodenplatte 7 mit einen umlaufenden Rand 12. Die Grundflächenmaße der Bodenplatte 7 betragen im Fall einer CD etwa 142 x 127 mm und im Fall einer DVD etwa 142 x 192 mm, während die Höhe des Randes 12 10, 20 oder 30 mm betragen kann. An zwei sich gegenüberliegenden Längsseiten weist der Rand 12 jeweils zwei dreieckige Überhöhungen 11 auf, die zur Befestigung einer Verpackung 4 dienen. Damit ist der erste Aufnahmeraum 6 gebildet.

Die dreieckigen Überhöhungen 11 weisen an ihren Endabschnitten Nasen 16 auf, die nach innen zueinander gerichtet sind. Die dreieckigen Überhöhungen 11 mit den Nasen 16 übergreifen teilweise die eingesetzte Verpackung 4 und haften sie durch die dreieckigen Überhöhungen 11 und die Nasen 16 fest.

Zusätzlich weist der umlaufende Rand 12 Öffnungen 9 auf, die in die beiden Längsseiten mit den dreieckigen Überhöhungen 11 eingebracht wurden und in die Stifte 20 einer Abdeckung 10 eingreifen können, um die Abdeckung 10 nach dem Einsetzen festzuhalten. Die Bodenplatte 7, die eingesetzte Abdeckung 10 und der umlaufende Rand 12 bilden den zweiten Aufnahmeraum 8 für die Aufnahme eines Booklets oder eines Merchandiseartikels.

Nachdem ein Booklet oder ein Merchandiseartikel in den zweiten Aufnahmeraum 8 des Behälters 2 gelegt wurde, wird dieser durch die Abdeckung 10 verschlossen, indem die Abdeckung 10 so auf den Behälter 2 aufgesetzt wird, dass die Stifte 20 in die Öffnungen 9 eingreifen und so die Abdeckung 10 festhalten.

Anschließend wird die Verpackung 4 in den ersten Aufnahmeraum 6 eingesetzt, indem sie seitlich von einer Querseite des Behälter 2 zwischen der Abdeckung 10 und den dreieckigen Überhöhungen 11 mit den Nasen 16 geschoben wird, bis die in Fig. 2 gezeigte Position erreicht ist, bei der die Bodenplatte 7 des Behälters 2 und die Verpackung 4 deckungsgleich übereinanderliegen.

Zur Entnahme des Booklets oder Merchandiseartikels wird zuerst die Verpackung 4 von dem Behälter 2 gelöst, indem sie soweit seitlich verschoben wird, bis sie nicht mehr in Eingriff mit den Überhöhungen 11 und den Nasen 16 steht und abgenommen werden kann. Anschließend wird die Abdeckung 10 entfernt, indem die Stifte 20 der Abdeckung 10 aus den Öffnungen des Behälters 2 gelöst werden, so dass das Booklet oder der Merchandiseartikel problemlos entnommen werden können.

Bei einem anderen Ausführungsbeispiel sind die dreieckigen Überhöhungen 11 aus einem elastischen Material gefertigt, so dass die Nasen 16, die an den Enden der dreieckigen Überhöhungen 11 angeordnet sind, nach außen gebogen werden können, um eine Verpackung 4 auf den Behälter 2 von vorne aufzusetzen. Nachdem die Verpackung 4 aufgesetzt ist, kehren die Nasen 16 an den dreieckigen Überhöhungen 11 in ihre Ausgangslage zurück und halten die Verpackung 4 fest, da die Nasen 16 die Verpackung 4 teilweise umgreifen.

Zum Lösen der Verpackung 4 werden die Nasen 16 wieder nach außen gebogen, so dass die Verpackung 4 vom Behälter 2 abgenommen werden kann. Anschließend kann auch die Abdeckung 10 abgenommen werden, um das Booklet oder den Merchandiseartikel aus dem zweiten Aufnahmeraum 8 zu entnehmen.

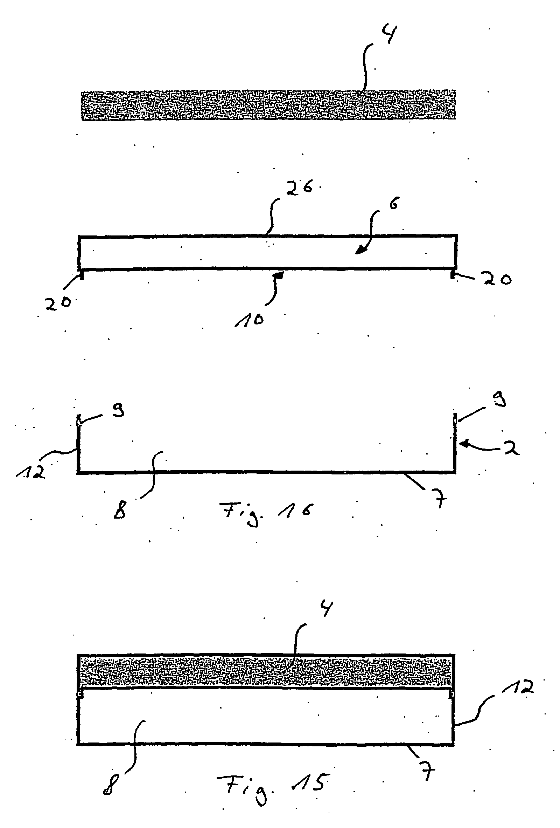

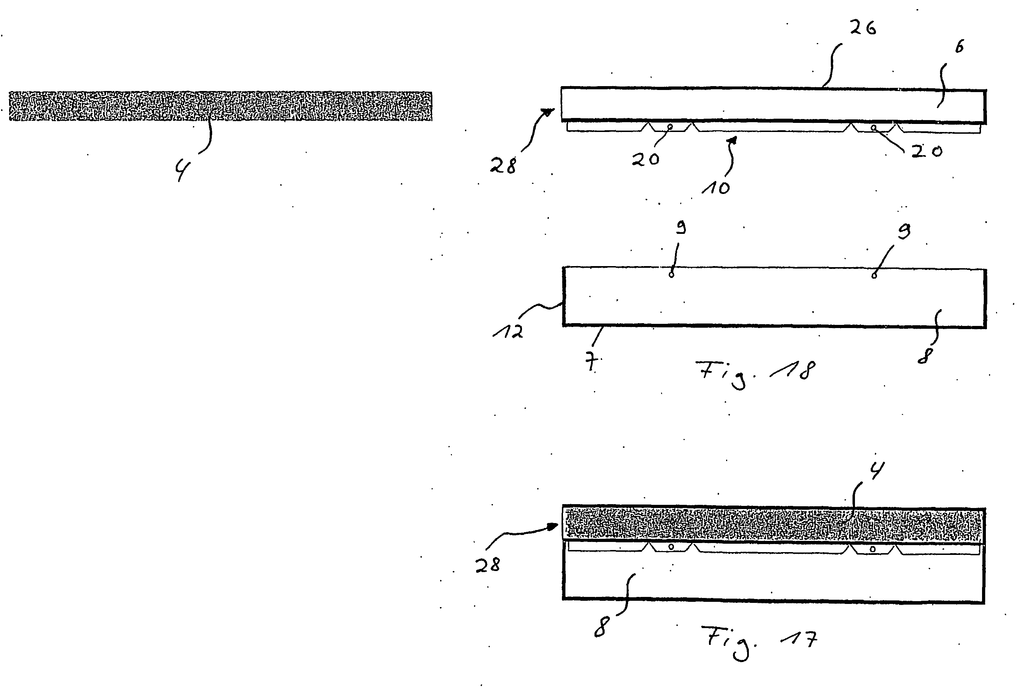

In den Fig. 7 bis 12 ist ein zweites Ausführungsbeispiel eines erfindungsgemäßen Behälters gezeigt.

Bei diesem Ausführungsbeispiel sind im Vergleich zum ersten Ausführungsbeispiel an dem umlaufenden Rand 14 an zwei sich gegenüberliegenden Längsseiten erhöhte Seitenwände 17 angeordnet, die den ersten Aufnahmeraum 6 seitlich begrenzen. An den oberen Enden der sich gegenüberliegenden Längsseiten sind zwei Kanten 18 angeordnet, die nach innen gerichtet sind, so dass sie ebenfalls eine eingeschobene Verpackung 4 teilweise umgreifen und festhalten können.

An der Innenseite dieser sich gegenüberliegenden Längsseiten sind je ein Schienenpaar 22 angeordnet, die jeweils ein u-förmigen Profil bilden, in das die Abdeckung 10 eingeschoben werden kann und darin festgehalten wird.

Nachdem ein Booklet oder Merchandiseartikel eingelegt wurde, wird der zweite Aufnahmeraum 8 durch Einschieben der Abdeckung 10 verschlossen. Anschließend wird die Verpackung 4 in Eingriff mit den erhöhten Seitenwänden 17 stehend in den ersten Aufnahmeraum 6 eingeschoben, bis sie an den Anschlag 24 stößt.

Zur Entnahme des Booklets oder des Merchandiseartikels wird zuerst die Verpackung 4 von dem Behälter 2 gelöst, in dem sie solange seitlich verschoben wird, bis sie nicht mehr in Eingriff mit den Kanten 18 und den erhöhten Seitenwänden 17 steht und abgenommen werden kann. Anschließend wird die Abdeckung 10 solange seitlich verschoben, bis die Abdeckung 10 nicht mehr in Eingriff mit den Schienenpaar 22 steht, so dass das Booklet oder der Merchandiseartikel problemlos entnommen werden können.

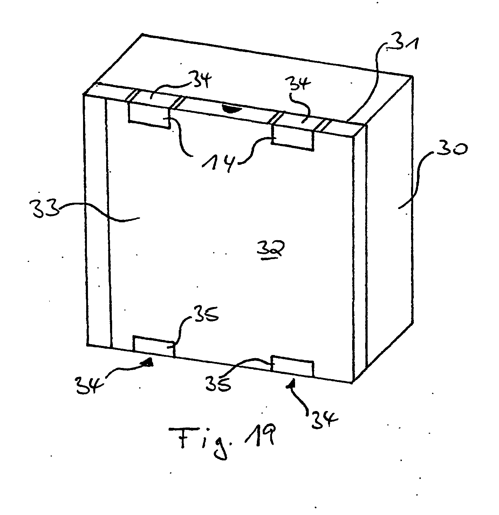

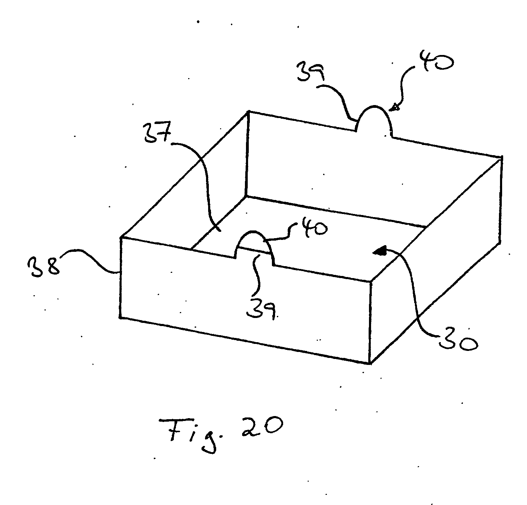

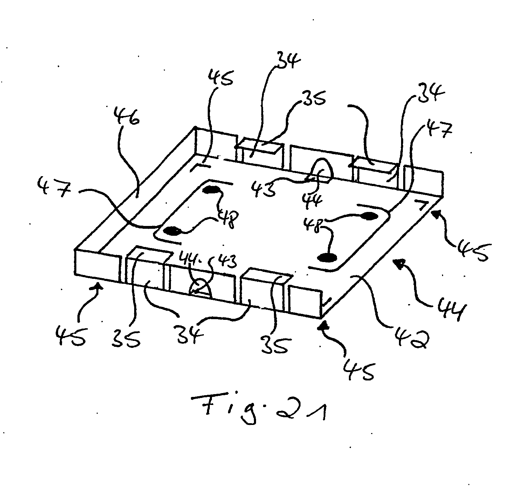

Es wird nun auf die Fig. 13 bis 18 Bezug genommen.

Bei diesem dritten Ausführungsbeispiel weist die Abdeckung 10 im Gegensatz zu den beiden vorangegangenen Ausführungsbeispielen einen quaderförmigen Aufnahmebehälter 26 auf, dessen Inneres den ersten Aufnahmeraum 6 bildet. In diesen den ersten Aufnahmeraum 6 bildenden Aufnahmebehälter 26 kann eine Verpackung 4 durch eine seitliche Einschuböffnung 28 eingeschoben und später entnommen werden.

Um die Abdeckung 10, die die Unterseite des Aufnahmebehälters 26 bzw. den ersten Aufnahmeraum 6 bildet, an dem Behälter 2 befestigen zu können, weist die Abdeckung 10 Stifte 20 auf, die in entsprechende Öffnungen 9 im umlaufenden Rand 12 des Behälters 2 eingreifen können.

Der zweite Aufnahmeraum 8 wird durch Aufsetzen der Abdeckung 10 und Einrasten der Stifte 20 in die Öffnungen 9 des Behälters 2 verschlossen, nachdem ein Booklet oder Merchandiseartikel eingelegt wurde. Anschließend wird die Verpackung 4 durch die seitliche Einschuböffnung 28 des Aufnahmebehälters 26 einschoben, bis sie vollständig in dem Aufnahmebehälter 26 aufgenommen ist.

Zur Entnahme des Booklets oder des Merchandiseartikels kann zuerst die Verpackung 4 aus dem Aufnahmebehälter 26 entnommen werden und anschließend wird der Aufnahmebehälter 26 von dem Behälter 2 gelöst oder es wird der Aufnahmebehälter 26 mit der darin befindlichen Verpackung 4 von dem Behälter 2 gelöst, so dass nun das Booklet oder der Mercadiseartikel problemlos entnommen werden kann, obwohl sich die Verpackung 4 im Unterschied zu den beiden vorangegangenen Ausführungsbeispielen noch im Aufnahmebehälter 26 befindet.

Anstelle einer Stiftverbindung zwischen erstem und zweitem Aufnahmeraum kann auch eine Gelenk- und Rastverbindung gewählt werden.

Es wird nun auf die Fig. 19 Bezug genommen.

Die Erfindung umfasst dabei einen zweiten Aufnahmeraum 30 und eine Abdeckung 31, mit der der zweite Aufnahmeraum 30 verschlossen werden kann. Der erste Aufnahmeraum 32, in dem ein Informationsträger 33, bspw. eine in einer Jewel-Case verpackte CD oder DVD, aufgenommen werden kann, ist an der Vorderseite der Abdeckung 31 ausgebildet, während der zweite Aufnahmeraum 30 durch das Innere des quaderförmigen Behälters hinter der Abdeckung 31 mit dem aufgesetzten Informationsträger 33 definiert ist.

An jeweils zwei sich gegenüberliegenden Seiten der Abdeckung 31 sind vier Halteelemente 34 angeordnet. An den Enden der Halteelemente 34 sind Vorsprünge 35 vorgesehen, die nach innen gerichtet sind und den eingesetzten Informationsträger 33 teilweise umfassen und festhalten.

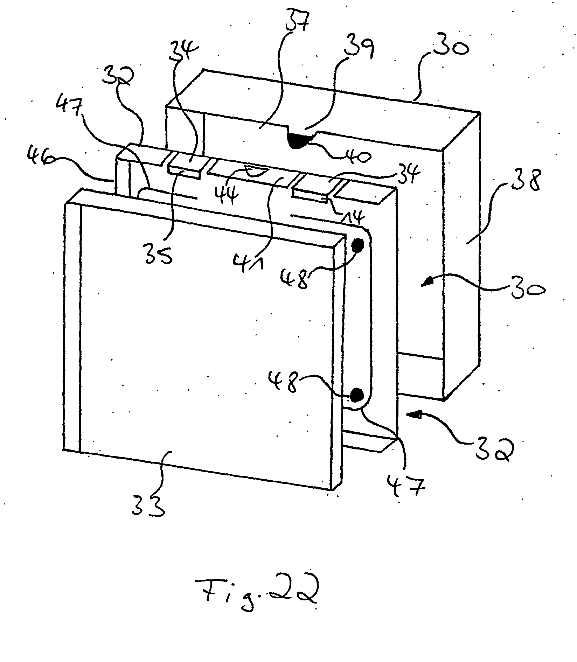

Der Aufbau des zweiten Aufnahmebehälters wird nun anhand der Fig. 20 erläutert.

Der zweite Aufnahmeraum besteht aus einer rechteckigen Bodenplatte 37 mit einem umlaufenden Rand 38. An zwei sich gegenüberliegenden Seiten des umlaufenden Randes 38 sind zwei Rasteinrichtungen angeordnet, von denen jede eine Verlängerung 39 mit einem nach außen gerichteten Haken 40 umfasst. Mit diesen Haken 40 kann die Abdeckung 31 am zweiten Aufnahmeraum befestigt werden, so dass der zweite Aufnahmeraum verschließbar ist. Die Verlängerungen 39 sind nach innen biegbar ausgebildet.

Es wird nun der Aufbau der Abdeckung 31 anhand der Fig. 21 erläutert.

Die Abdeckung 31 besteht aus einer Grundplatte 42, deren Größenflächenmaße denen der Bodenplatte 37 des zweiten Aufnahmeraums entsprechen. Die Grundplatte 42 der Abdeckung 31 weist zwei seitliche Öffnungen 43 auf, die so angeordnet sind, dass durch sie die Haken 40 an den Verlängerungen 39 des zweiten Aufnahmeraums geführt werden können, wenn die Abdeckung 31 auf den zweiten Aufnahmeraum aufgesetzt wird.

An zwei sich gegenüberliegenden Seiten der Grundplatte 42 der Abdeckung 31 sind aufrecht auf der Grundplatte 42 stehende Seitenwände 41 vorgesehen, von denen jede eine Ausnehmung 44 aufweist. Wenn die Abdeckung 31 mit dem zweiten Aufnahmeraum verbunden ist, stehen die Haken 40 des zweiten Aufnahmeraums in Eingriff mit den beiden Ausnehmungen 44 und halten so die Abdeckung 31 am zweiten Aufnahmeraum fest.

An beiden Seiten der aufrecht stehenden Seitenwände 41 sind Halteelemente 34 angeordnet, die an ihren Enden nach innen gerichtete Vorsprünge 35 aufweisen, um einen eingesetzten Informationsträger 33 festzuhalten. Dabei sind die Halteelemente 34 federnd ausgebildet, so dass sie nach außen gebogen werden können, um einen eingesetzten Informationsträger 33 von der Abdeckung 31 zu lösen. Umgekehrt kann ein verpackter Informationsträger 33 auch an der Abdeckung 31 befestigt werden, indem er auf die Abdeckung 31 aufgesetzt und dann angedrückt wird, wobei die Vorsprünge 35 an den fedemd ausgebildeten Halterelemente 34 zuerst nach außen gedrückt werden und nach dem Einrasten des verpackten Informationsträgers 33 wieder zurückschnappen. Alternativ kann der verpackte Informationsträger 33 auch seitlich in den ersten Aufnahmeraum 32 zwischen der Grundplatte 42 der Abdeckung 31 und der Ebene der Vorsprünge 35 eingeschoben werden, wobei an einer dritten Seite der Abdeckung 31 ein Anschlag 46 vorgesehen ist, der diese Einschubbewegung stoppt.

In die Grundplatte 42 der Abdeckung 31 sind zwei C-förmige Einschnitte 47 so eingebracht, dass auf zwei dadurch abgrenzten Bereichen der Grundplatte 42 angeordnete erhobene Andrückelemente 48 beweglich an der Grundplatte 42 und gleichzeitig federnd ausgebildet sind. Diese Andrückelemente 48 pressen ein in den ersten Aufnahmeraum 32 eingeführten Informationsträger 33 an die Vorsprünge 35, so dass dieser von den Vorsprüngen 35 und den Andrückelementen 48 zusammen festgehalten wird. Die federnd ausgebildeten Andrückelemente, 48 bewirken auch, dass unterschiedlich dicke Jewel-Cases zur Verpackung von Informationsträgern 33 in den ersten Aufnahmeraum 32 eingeführt werden können und dann von den Vorsprüngen 35 und Andrückelementen 48 festgehalten werden, da die federnd ausgebildeten Andrückelemente 48 entsprechend der Dicke der jeweiligen Verpackung des Informationsträgers 33 verschwenkt werden.

In den Ecken der Grundplatte 42 sind an der Seite, mit der die Abdeckung 31 auf den zweiten Aufnahmeraum aufgesetzt wird, winkelförmige Blockierelemente 45 angeordnet, die mit dem umlaufenden Rand 38 des zweiten Aufnahmeraums in Eingriff stehen, wenn die Abdeckung 31 auf den zweiten Aufnahmeraum aufgesetzt ist. Die Blockierelemente 45 verhindern, dass die Abdeckung 31 relativ zu dem zweiten Aufnahmeraum verdreht werden kann mit der Folge, dass die Verlängerungen 39 am zweiten Aufnahmeraum, die durch die Öffnungen 43 der Grundplatte 42 der Abdeckung 31 geführt sind, brechen würden.

Es wird nun auf die Fig. 22 Bezug genommen.

Der erfindungsgemäße Behälter wird wie folgt zusammengesetzt. Zuerst kann in den zweiten Aufnahmeraum 30 im Inneren des zweiten Aufnahmeraums ein Merchandisingartikel eingelegt werden. Dann wird die Abdeckung 31 auf den zweiten Aufnahmeraum aufgesetzt, wobei die Verlängerungen 39 des zweiten Aufnahmeraums durch die Öffnungen 43 der Grundplatte 42 geführt werden, bis die beiden Haken 40 an den beiden Verlängerungen 39 in die Ausnehmungen 44 an den beiden Seitenwänden der Abdeckung 31 einrasten. Dann liegt die Abdeckung 31 auf dem umlaufenden Rand 38 des zweiten Aufnahmeraums auf und verschließt diesen.

Als nächstes wird ein in einer Jewel-Case verpackter Informationsträger 33 seitlich in den ersten Aufnahmeraum 32 zwischen den Andrückelementen 48 und den Vorsprüngen 35 bis zum Erreichen des Anschlags 46 eingeschoben. Alternativ kann der verpackte Informationsträger 33 von oben in den ersten Aufnahmeraum 32 eingesetzt und eingedrückt werden, wobei die Vorsprünge 35 an den Haltelementen 34 nach außen gedrückt werden und der verpackte Informationsträger 33 einrastet und von den Halteelementen 34 festgehalten wird.

Zugleich werden die Haken 40 an den Verlängerungen 39 durch den aufgesetzten Informationsträger 33 blockiert, so dass sie nicht mehr nach innen gebogen werden können, um aus den Ausnehmungen 44 gelöst zu werden. Die Abdeckung 31 kann erst vom zweiten Aufnahmeraum abgenommen werden, wenn der verpackte Informationsträger 33 durch seitliches Verschieben aus dem ersten Aufnahmeraum 32 entfernt wurde, so dass die Verlängerungen 39 nach innen verbogen werden können, bis die Haken 40 nicht mehr in Eingriff mit den Ausnehmungen 44 stehen. Dabei erlauben es die Ausnehmungen 44, direkt Druck auf die Verlängerungen 39 auszuüben, um diese nach innen zu drücken.

Ein weiteres Ausführungsbeispiel der Erfindung weist ein Filmgelenk auf, das den zweiten Aufnahmeraum 30 und die Abdeckung 31 schwenkbar miteinander verbindet, wobei die Abdeckung 31 und der zweite Aufnahmeraum einstückig ausgebildet sind und zusammen in einem Arbeitsschritt hergestellt werden können.

Die Verriegelung der schwenkbaren Abdeckung 31 am zweiten Aufnahmeraum erfolgt ebenfalls mit einer durch eine Öffnung 43 der Abdeckung 31 führbaren Verlängerung 39, an dessen Ende ein Haken 40 angeordnet ist, der in eine Ausnehmung 44 der Abdeckung 31 eingreift. Diese Rasteinrichtung wird von einem . verpackten Informationsträger 33, der in den ersten Aufnahmeraum 32 eingeführt ist, blockiert, so dass der zweite Aufnahmeraum erst nach dem Entfernen des verpackten Informationsträgers 33 durch ein Verschwenken der Abdeckung 31 geöffnet werden kann.

Der erfindungsgemäße Behälter insgesamt oder zumindest der zweite Aufnahmegehälter können auch leicht konisch gestaltete Seitenwände aufweisen, um eine bessere Stapelbarkeit der Behälter zu ermöglichen, was u.a. auch Transportkosten verringert.

### Bezugzeichenliste

- 1: Informationsträger
- 2: Behälter
- 3: Halter
- 4: Verpackung
- 5: Deckel
- 6: erster Aufnahmeraum
- 7: Bodenplatte
- 8: zweiter Aufnahmeraum
- 9: Öffnung
- 10: Abdeckung
- 11: Überhöhung
- 12: umlaufender Rand
- 16: Nase
- 17: Seitenwand
- 18: Kante
- 20: Stift
- 22: Schienenpaar
- 24: Anschlag
- 26: Aufnahmebehälter
- 28: Einschuböffnung
- 30: zweiter Aufnahmeraum
- 31: Abdeckung
- 32: erster Aufnahmeraum
- 33: verpackter Informationsträger
- 34: Halteelement
- 35: Vorsprung
- 37: Bodenplatte
- 38: umlaufender Rand
- 39: Verlängerung
- 40: Haken
- 41: Seitenwand
- 42: Grundplatte
- 43: Öffnung
- 44: Ausnehmung
- 45: Blockierelement
- 46: Anschlag
- 47: Einschnitt
- 48: Andrückelement

## Patentansprüche

1. Behälter zur Aufnahme eines verpackten Informationsträgers in Gestalt einer CD oder DVD, mit einem ersten Aufnahmeraum (6) zur Aufnahme des verpackten Informationsträgers (1) und einem zweiten Aufnahmeraum (8) zur Aufnahme von Printmaterialien, einem T-Shirt oder dergleichen, der vom ersten Aufnahmeraum (6) abgeteilt ist, **dadurch gekennzeichnet, dass** der erste Aufnahmeraum (6) eine Halterung zur Aufnahme des verpackten Informationsträgers (1) aufweist, und dass der zweite Aufnahmeraum (8) mittels einer entfembaren Abdeckung (10) vom ersten Aufnahmeraum (6) abgeteilt ist, wobei der erste Aufnahmeraum (6), der zweite Aufnahmeraum (8) und die entfembare Abdeckung (10) im wesentlichen die gleichen Grundflächenmaße aufweisen.

2. Behälter nach Anspruch 1, **dadurch gekennzeichnet, dass** die Verpackung (4) des Informationsträgers (1) als standardisierter CD- oder DVD-Behälter ausgebildet ist.

3. Behälter nach Anspruch 1 oder 2, **dadurch gekennzeichnet, dass** der zweite Aufnahmeraum (8) rechteckförmig mit einem umlaufenden Rand (12) ausgebildet ist, der seitliche Überhöhungen (11) aufweist, die die Halterung bilden und an zwei sich gegenüberliegenden Längsseiten des umlaufenden Randes (12) angeordnet sind und an deren äußeren Enden nach innen gerichtete Nasen (16) vorgesehen sind, die den ersten Aufnahmeraum (6) teilweise umgreifen und eine Verpackung (4) festhalten können.

4. Behälter nach Anspruch 1 oder 2, **dadurch gekennzeichnet, dass** der zweite Aufnahmeraum (8) mit einem umlaufenden Rand (12) ausgebildet ist, der an zwei sich gegenüberliegenden Längsseiten erhöhte Seitenwände (17) aufweist, die die Halterung bilden und den ersten Aufnahmeraum (6) begrenzen, wobei an den äußeren Enden der erhöhten Seitenwände (17) nach innen gerichtete Kanten (18) angeordnet sind, die den ersten Aufnahmeraum (6) teilweise umgreifen und eine Verpackung (4) festhalten können.

5. Behälter nach einem der Ansprüche 3 oder 4, **dadurch gekennzeichnet, dass** die Abdeckung (10) in ein Schienenpaar (22) einschiebbar ist, das an der Innenseite des umlaufenden Randes (12) angeordnet ist.

6. Behälter nach einem oder mehreren der vorangehenden Ansprüche, **dadurch gekennzeichnet, dass** der erste Aufnahmeraum (6) einen Anschlag (24) zur Begrenzung der Einschubstrecke der Verpackung (4) enthält.

7. Behälter nach Anspruch 3, **dadurch gekennzeichnet, dass** die Überhöhungen (11) aus einem elastischem Material gefertigt sind.

8. Behälter nach einem oder mehreren der vorangehenden Ansprüche, **dadurch gekennzeichnet, dass** die Abdeckung (10) Stifte (20) aufweist, die in Öffnungen (9) an der Innenseite des umlaufenden Randes (12) des zweiten Aufnahmeraumes (8) einrastbar ist.

9. Behälter nach einem oder mehreren der vorgehenden Ansprüche, **dadurch gekennzeichnet, dass** der zweite Aufnahmeraum (8) Halterungen zur räumlichen Festlegung von in den zweiten Aufnahmeraum (8) eingeführte Gegenstände enthält.

10. Behälter nach einem oder mehreren der vorgehenden Ansprüche, **dadurch gekennzeichnet, dass** der Behälter (2) und die Abdeckung (10) aus durchsichtigem Polystyrol gefertigt sind.

11. Behälter nach Anspruch 1, **dadurch gekennzeichnet, dass** die entfembare Abdeckung einen Teil des.ersten Aufnahmeraums bildet.

12. Behälter nach Anspruch 11, **dadurch gekennzeichnet, dass** der erste Aufnahmeraum (32) eine rechteckige Grundplatte (42), Halteelemente (34), die an zwei gegenüberliegenden Kanten der Grundplatte (42) angeordnet sind, und nach innen gerichtete Vorsprünge (35) am äußeren Ende der Halteelemente (34) enthält, und dass die Grundplatte (42) in den ersten Aufnahmeraum (32) gerichtete Andrückelemente (48) aufweist, die federnd ausgebildet sind, so dass ein in den ersten Aufnahmeraum (32) eingesetzter Informationsträger (33) von den Andrückelementen (48) an die nach innen gerichteten Vorsprünge (35) gedrückt wird und so zwischen den Andrückelementen (48) und den Vorsprüngen (35) gehalten ist.

13. Behälter nach Anspruch 12, **dadurch gekennzeichnet, dass** die Grundplatte (42) kurvenförmige Einschnitte (47) aufweist, durch die in der Grundplatte (42) abgegrenzte, federnde Flächenbereiche ausgebildet sind, die über Stege mit dem übrigen Bereich der Grundplatte (42) verbunden sind, und dass die von der Grundplatte (42) vorstehenden Andrückelemente (48), die gegen einen in den ersten Aufnahmeraum (32) eingeführten Informationsträger (33) drücken, in den gebildeten Flächenbereichen angeordnet sind.

14. Behälter nach Anspruch 12 oder 13, **dadurch gekennzeichnet, dass** der Behälter wenigstens eine Rasteinrichtung zur Befestigung des ersten Aufnahmeraums (32) am zweiten Aufnahmeraum (30) aufweist, die durch einen in den ersten Aufnahmeraum (32) eingesetzten Informationsträger (33) gegen Abnahme vom zweiten Aufnahmeraum (30) blockierbar ist.

15. Behälter nach Anspruch 14, **dadurch gekennzeichnet, dass** der erste Aufnahmeraum (32) wenigstens eine Ausnehmung (44) und die Rasteinrichtung des zweiten Aufnahmeraums (30) wenigstens einen seitlich angeordneten Haken (40) am Ende einer biegbaren Verlängerung (39) aufweist, wobei der Haken (40) in die Ausnehmung (44) des ersten Aufnahmeraums (32) eingreifen kann, so dass der erste Aufnahmeraum (32) am zweiten Aufnahmeraum (30) befestigbar ist, wobei ein in den ersten Aufnahmeraum (32) eingesetzter Informationsträger (33) verhindert, dass der Haken (40) nach innen gedrückt und damit aus der Ausnehmung (44) gelöst werden kann.

16. Behälter nach einem der Ansprüche 12 - 15, **dadurch gekennzeichnet, dass** die Halteelemente (34) federnd ausgebildet sind.

17. Behälter nach einem der Ansprüche 12 - 16, **dadurch gekennzeichnet, dass** der erste Aufnahmeraum (32) am zweiten Aufnahmeraum (30) durch ein Filmgelenk schwenkbar befestigt ist.

## Claims

1. Container for accommodating a packaged data carrier, designated as a CD or DVD, having a first accommodation space (6) for accommodating the packaged data carrier (1), and a second accommodation space (8) for accommodating print materials, a T-shirt, or the like, which is separated from the first accommodation space (6), **characterized in that** the first accommodation space (6) has a holder to accommodate the packaged data carrier (1), and the second accommodation space (8) is separated from the first accommodation space (6) by means of a removable covering (10), whereby the first accommodation space (6), the second accommodation space (8) and the removable covering (10) have essentially the same base area dimensions.

2. Container according to claim 1, **characterized in that** the packaging (4) of the data carrier (1) is configured as a standardized CD or DVD container.

3. Container according to claim 1 or 2, **characterized in that** the second accommodation space (8) is configured to be rectangular, with a circumferential border (12) that has lateral super-elevations (11), which form the holder and are arranged on two opposite lengthwise sides of the circumferential border (12), and at the outer ends of which projections (16) that face inwards are provided, which partially overlap the first accommodation space (6) and can hold a packaging (4) in place.

4. Container according to claim 1 or 2, **characterized in that** the second accommodation space (8) is configured with a circumferential border (12) that has elevated side walls (17) on two opposite lengthwise sides, which walls form the holder and delimit the first accommodation space (6), whereby edges (18) directed inwards are arranged at the outer ends of the elevated side walls (17), which edges partly overlap the first accommodation space (6) and are able to hold a packaging (4) in place.

5. Container according to one of claims 3 or 4, **characterized in that** the covering (10) can be inserted into a pair of rails (22) that is arranged on the insides of the circumferential border (12).

6. Container according to one or more of the preceding claims, **characterized in that** the first accommodation space (6) contains a stop (24) to limit the insertion path of the packaging (4).

7. Container according to claim 3, **characterized in that** the super-elevations (11) are made from an elastic material.

8. Container according to one or more of the preceding claims, **characterized in that** the covering (10) has pins (20) that can engage into openings (9) on the inside of the circumferential border (12) of the second accommodation space (8).

9. Container according to one or more of the preceding claims, **characterized in that** the second accommodation space (8) has holders for fixing objects introduced into the second accommodation space (8) in place spatially.

10. Container according to one or more of the preceding claims, **characterized in that** the container (2) and the covering (10) are made of transparent polystyrene.

11. Container according to claim 1, **characterized in that** the removable covering forms a part of the first accommodation space.

12. Container according to claim 11, **characterized in that** the first accommodation space (32) contains a rectangular base plate (42), holder elements (34) that are arranged on two opposite edges of the base plate (42), and projections (35) on the outer end of the holder elements (34) that are directed inwards, and that the base plate (42) has press-down elements (48) that are directed into the first accommodation space (32), which are configured to be resilient, so that a data carrier (33) that has been set into the first accommodation space (32) is pressed against the projections (35) that are directed inwards, by the press-down elements (48), and thus is held between the press-down elements (48) and the projections (35).

13. Container according to claim 12, **characterized in that** the base plate (42) has curve-shaped indentations (47), by means of which resilient surface regions delimited in the base plate (42) are formed, which regions are connected with the remaining region of the base plate (42) by way of gates, and that the press-down elements (48) that project from the base plate (42), which press against a data carrier (33) introduced into the first accommodation space (32), are arranged in the surface regions that are formed.

14. Container according to claim 12 or 13, **characterized in that** the container has at least one catch device to attach the first accommodation space (32) on the second accommodation space (30), which device can be blocked by a data carrier (33) inserted into the first accommodation space (32), to prevent it from being removed from the second accommodation space (30).

15. Container according to claim 14, **characterized in that** the first accommodation space (32) has at least one recess (44), and the catch device of the second accommodation space (30) has at least one hook (40), arranged laterally at the end of a bendable extension (39), whereby the hook (40) can engage in the recess (44) of the first accommodation space (32), so that the first accommodation space (32) can be attached to the second accommodation space (30), whereby a data carrier (33) inserted into the first accommodation space (32) prevents the hook (40) from being pressed inwards and thereby being released from the recess (44).

16. Container according to one of claims 12 - 15, **characterized in that** the holder elements (34) are configured to be resilient.

17. Container according to one of claims 12 - 16, **characterized in that** the first accommodation space (32) is attached to the second accommodation space (30) by means of a film hinge, so as to pivot.

## Revendications

1. Boîtier pour recevoir un support de données emballé en forme de CD ou de DVD, comprenant un premier logement (6) pour recevoir le support de données emballé (1) et un second logement (8) pour recevoir des produits imprimés, un T-shirt, etc., qui est séparé du premier logement (6), **caractérisé en ce que** le premier logement (6) présente une attache pour recevoir le support de données emballé (1) et **en ce que** le second logement (8) est séparé du premier logement (6) grâce à un couvercle amovible (10), le premier logement (6), le second logement (8) et le couvercle amovible (10) présentant sensiblement les mêmes dimensions de surface de base .

2. Boîtier selon la revendication 1, **caractérisé en ce que** l'emballage (4) du support de données (1) est conçu comme un boîtier pour CD ou DVD normalisé.

3. Boîtier selon la revendication 1 ou 2, **caractérisé en ce que** le second logement (8) est rectangulaire avec un bord périphérique (12) présentant des parties relevées latérales (11) qui forment l'attache, qui sont disposées sur deux côtés longitudinaux opposés du bord périphérique (12) et aux extrémités extérieures desquelles sont prévues des saillies (16), dirigées vers l'intérieur, qui entourent partiellement le premier logement (6) et peuvent bloquer un emballage (4).

4. Boîtier selon la revendication 1 ou 2, **caractérisé en ce que** le second logement (8) est pourvu d'un bord périphérique (12) qui présente sur deux côtés longitudinaux opposés des parois latérales relevées (17) qui forment l'attache et qui délimitent le premier logement (6), étant précisé qu'il est prévu sur les extrémités extérieures des parois latérales relevées (17) des bords (18), dirigés vers l'intérieur, qui entourent partiellement le premier logement (6) et qui peuvent bloquer un emballage (4).

5. Boîtier selon la revendication 3 ou 4, **caractérisé en ce que** le couvercle (10) est apte à être glissé dans une paire de rails (22) qui est disposée sur le côté intérieur du bord périphérique (12).

6. Boîtier selon l'une au moins des revendications précédentes, **caractérisé en ce que** le premier logement (6) contient une butée (24) pour limiter la course d'insertion de l'emballage (4).

7. Boîtier selon la revendication 3, **caractérisé en ce que** les parties surélevées (11) sont fabriquées à partir d'une matière élastique.

8. Boîtier selon l'une au moins des revendications précédentes, **caractérisé en ce que** le couvercle (10) présente des tiges (20) qui sont aptes à être encliquetées dans des ouvertures (9) prévues sur le côté intérieur du bord périphérique (12) du second logement (8).

9. Boîtier selon l'une au moins des revendications précédentes, **caractérisé en ce que** le second logement (8) contient des attaches pour bloquer dans l'espace des objets introduits dans ledit second logement (8).

10. Boîtier selon l'une au moins des revendications précédentes, **caractérisé en ce que** le boîtier (2) et le couvercle (10) sont fabriqués à partir de polystyrène transparent.

11. Boîtier selon la revendication 1, **caractérisé en ce que** le couvercle amovible forme une partie du premier logement.

12. Boîtier selon la revendication 11, **caractérisé en ce que** le premier logement (32) contient une plaque de base rectangulaire (42), des éléments de fixation (34) qui sont disposés sur deux bords opposés de la plaque de base (42), et des saillies (35) dirigées vers l'intérieur, sur l'extrémité extérieure des éléments de fixation (34), et **en ce que** la plaque de base (42) présente des éléments presseurs (48) qui sont dirigés vers le premier logement (32) et qui sont élastiques, de sorte qu'un support de données (33) inséré dans le premier logement (32) est poussé par les éléments presseurs (48) contre les saillies (35) dirigées vers l'intérieur et est ainsi maintenu entre les éléments presseurs (48) et les saillies (35).

13. Boîtier selon la revendication 12, **caractérisé en ce que** la plaque de base (42) présente des entailles courbes (47) grâce auxquelles sont formées les zones de surface élastiques qui sont délimitées dans ladite plaque de base (42) et qui sont reliées par des pattes au reste de celle-ci, et **en ce que** les éléments presseurs (48) qui dépassent de la plaque de base (42) et qui exercent une pression contre un support de données (33) introduit dans le premier logement (32) sont disposés dans les zones de surface formées.

14. Boîtier selon la revendication 12 ou 13, **caractérisé en ce qu'**il comporte au moins un dispositif d'encliquetage pour fixer le premier logement (32) au second logement (30), qui est apte à être bloqué par un support de données (33) introduit dans le premier logement (32) pour ne pas pouvoir être enlevé du second logement (30).

15. Boîtier selon la revendication 14, **caractérisé en ce que** le premier logement (32) présente au moins un creux (44) tandis que le dispositif d'encliquetage du second logement (30) présente au moins un crochet (40) disposé sur le côté, à l'extrémité d'un prolongement flexible (39), le crochet (40) pouvant pénétrer dans le creux (44) du premier logement (32), lequel peut ainsi être fixé sur le second logement (30), et un support de données (33) introduit dans le premier logement (32) empêchant que le crochet (40) soit pressé vers l'intérieur et soit ainsi détaché du creux (44).

16. Boîtier selon l'une des revendications 12 à 15, **caractérisé en ce que** les éléments de fixation (34) sont élastiques.

17. Boîtier selon l'une des revendications 12 à 16, **caractérisé en ce que** le premier logement (32) est fixé de manière pivotante au second logement (30) grâce à une articulation en forme de film.
